(19) Europäisches Patentamt / European Patent Office / Office européen des brevets

(11) **EP 2 846 166 A1**

(12) **DEMANDE DE BREVET EUROPEEN**

(43) Date de publication:
**11.03.2015 Bulletin 2015/11**

(51) Int Cl.:
***G01S 3/74*** *(2006.01)*   ***G01S 3/46*** *(2006.01)*

(21) Numéro de dépôt: **14184080.1**

(22) Date de dépôt: **09.09.2014**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(30) Priorité: **09.09.2013 FR 1302093**

(71) Demandeur: **Thales**
**92200 Neuilly Sur Seine (FR)**

(72) Inventeur: **Heurguier, Dominique**
**92622 GENNEVILLIERS CEDEX (FR)**

(74) Mandataire: **Blot, Philippe Robert Emile**
**Cabinet Lavoix**
**2, place d'Estienne d'Orves**
**75441 Paris Cedex 09 (FR)**

(54) **Procédé de caractérisation d'au moins une source de signal**

(57)    Ce procédé de caractérisation d'au moins une source de signal (12) comporte les étapes consistant en :
A/ mesure, depuis un ensemble de capteurs (10), d'un ensemble de données techniques propres aux signaux émis par la ou chaque source de signal (12) ;
B/ regroupement (302, 304) des données techniques en un ensemble de classes en fonction des corrélations sur les données ; et
C/ caractériser la ou chaque source de signal à partir des regroupements de données techniques effectuées.
    L'étape de regroupement comprend :
a) calculer (300) des corrélations sur des n-uplets de données avec n > 2 ;
b) calculer (338) une erreur globale de partitionnement (Er(x)) pour différentes répartitions des données dans des classes, l'erreur globale étant définie comme une somme, pour tous les n-uplets :
- des coûts de partitionnement $(1 - c(i_1, ...ci_n))$ d'un n-uplet dans une même classe si toutes les données du n-uplet sont dans une même classe, le coût de partitionnement $(1 - c(i_i...i_n))$ dans une même classe étant une fonction décroissante de la corrélation du n-uplet ; et
- des coûts de partitionnement $(c(i_1, ...i_n))$ d'un n-uplet dans des classes différentes lorsque toutes les données du n-uplet ne sont pas dans une même classe, le coût de partitionnement $(c(i_1...i_n))$ dans des classes différentes étant une fonction croissante de la corrélation du n-uplet ; et

c) retenir (340) comme regroupement de données la répartition dans les classes minimisant l'erreur globale.

FIG.2 (début)

EP 2 846 166 A1

**(Cont. page suivante)**

FIG.2 (fin)

A

ordonner les classes $C_1...C_2$ dont le cardinal t >n —330

Choix de la 1ère classe —332

Choix de la classe suivante 350

Ordonner les éléments de la classe —334

Choix du 1er élément i —336

Reste des classes ? 348

non

Fin 352

oui

Choix de l'élément i suivant —346

Calcul de l'erreur globale en déplaçant i vers chaque autre classe —338

Reste des données i ? 344

oui

non

Laisser l'élément i dans sa classe —343

Erreur globale baisse ? 340

non

oui

Introduire i dans la classe donnant l'erreur globale la plus faible 342

304

**Description**

La présente invention concerne un procédé de caractérisation d'au moins une source de signal comportant les étapes consistant en :

A/ mesure, depuis un ensemble de capteurs, d'un ensemble de données techniques propres aux signaux émis par la ou chaque source de signal ;
B/ regroupement des données techniques en un ensemble de classes en fonction des corrélations sur les données ; et
C/ caractériser la ou chaque source de signal à partir des regroupements de données techniques effectuées.

Certains équipements électroniques, tels que des équipements goniométriques, ou des radars produisent des flux de données représentatives d'éléments techniques qui sont en quantité très importante. Pour assurer le traitement de ces données, il est souvent nécessaire de regrouper ces données dans un certain nombre de classes caractérisant les entités qui sont à l'origine de ces données (émetteur, écho radar, etc.). Les données sont regroupées dans ces classes en fonction de leur proximité vis-à-vis de certains critères de ressemblance.

Une méthode largement utilisée pour regrouper les données dans différentes classes est l'analyse relationnelle. Cette technique repose sur l'utilisation de la mesure de similarité et sur des comparaisons par paire faites entre les données. La mesure de similarité est une valeur existant pour chaque couple de données. Cette valeur est représentative de la proximité des deux données vis-à-vis d'un ou plusieurs critères.

Dans certaines situations, la mesure de similarité pour chacune des paires n'existe pas et l'on dispose seulement d'une corrélation sur des n-uplets de données (n > 2).

L'analyse relationnelle ne peut alors être mise en oeuvre et la répartition des données dans les différentes classes s'effectue difficilement, sauf à utiliser des procédés ad hoc dédiés au problème considéré.

Par exemple, on utilise un procédé de « multilocalisation » pour le regroupement de mesures goniométriques par émetteur ou encore des procédés à base de DTOA (Différence of Time of Arrival en anglais) pour le désentrelacement de signaux périodiques impulsionnels.

La nécessité de définir un procédé ad hoc en fonction du type de données à traiter pour le regroupement de données par classe est complexe à mettre en oeuvre et d'un coût de développement relativement élevé.

L'invention a pour but de proposer un procédé général de caractérisation par classes de données qui puissent être d'usage général pour la caractérisation d'une source de signal.

A cet effet, l'invention a pour objet un procédé de caractérisation d'au moins une source de signal, caractérisé en ce que l'étape de regroupement comprend :

a) calculer des corrélations sur des n-uplets de données avec n > 2 ;
b) calculer une erreur globale de partitionnement pour différentes répartitions des données dans des classes, l'erreur globale étant définie comme une somme, pour tous les n-uplets :

- des coûts de partitionnement $(1 - c(i_1, ...ci_n))$ d'un n-uplet dans une même classe si toutes les données du n-uplet sont dans une même classe, le coût de partitionnement $(1 - c(i_1...i_n))$ dans une même classe étant une fonction décroissante de la corrélation du n-uplet ; et
- des coûts de partitionnement $(c(i_1, ...i_n))$ d'un n-uplet dans des classes différentes lorsque toutes les données du n-uplet ne sont pas dans une même classe, le coût de partitionnement $(c(i_1...i_n))$ dans des classes différentes étant une fonction croissante de la corrélation du n-uplet ; et

c) retenir comme regroupement de données la répartition dans les classes minimisant l'erreur globale.

Suivant des modes particuliers de réalisation, le procédé comporte une ou plusieurs des caractéristiques suivantes :

- le coût de partitionnement dans une même classe est égale à 1 diminué de la corrélation du n-uplet $(1 - c(i_1, ...i_n))$ et le coût de partitionnement dans des classes différentes est égal à la corrélation du n-uplet $(c(i_1...1_n))$ ;
- le calcul d'une erreur globale de partitionnement pour différentes répartitions comporte :

a1) une étape initiale de répartition des données dans M classes ;
a2) une étape de déplacement des données entre les classes avec pour chaque déplacement le calcul d'une erreur globale de partitionnement ;

- l'étape initiale de répartition comporte le calcul d'une fonction de cohérence entre les données d'une classe et le choix, pour créer une nouvelle classe, des données de l'ensemble de cardinal maximal et dont la fonction de cohérence est supérieure à un seuil prédéterminé ;

- les données techniques sont des directions d'émission de signaux interceptés depuis la ou chaque source de signal et la caractérisation de la ou chaque source de signal comporte une étape d'estimation de la position de la ou chaque source de signal par triangulation des données d'une même classe pour chaque source ; et
- les données techniques sont des informations temporelles caractéristiques des signaux interceptés depuis la ou chaque source de signal et la caractérisation de la ou

chaque source comporte une étape d'estimation du mode d'émission de chaque source à partir des informations temporelles caractéristiques d'une même classe pour chaque source.

L'invention a également pour objet une installation de caractérisation d'au moins une source de signal comportant :

- des moyens de mesure, depuis un ensemble de capteurs, d'un ensemble de données techniques propres aux signaux émis par la ou chaque source de signal ;
- des moyens de regroupement des données techniques en un ensemble de classes en fonction des corrélations sur les données ; et
- des moyens pour caractériser la ou chaque source de signal à partir des regroupements de données techniques effectuées ;

caractérisé en ce que les moyens de regroupement comprennent :

a) des moyens de calcul de corrélations sur des n-uplets de données avec n > 2 ;
b) des moyens de calculer une erreur globale de partitionnement pour différentes répartitions des données dans des classes, l'erreur globale étant définie comme une somme, pour tous les n-uplets :

- des coûts de partitionnement $(1 - c(i_1, ...ci_n))$ d'un n-uplet dans une même classe si toutes les données du n-uplet sont dans une même classe, le coût de partitionnement $(1 - c(i_1...i_n))$ dans une même classe étant une fonction décroissante de la corrélation du n-uplet ; et
- des coûts de partitionnement $(c(i_1, ...i_n))$ d'un n-uplet dans des classes différentes lorsque toutes les données du n-uplet ne sont pas dans une même classe, le coût de partitionnement $(c(i_1...i_n))$ dans des classes différentes étant une fonction croissante de la corrélation du n-uplet.

c) des moyens pour retenir comme regroupement de données la répartition dans les classes minimisant l'erreur globale.

L'invention sera mieux comprise à la lecture de la description qui va suivre, donnée uniquement à titre d'exemple et faite en se référant aux dessins sur lesquels :

- la figure 1 est une vue schématique illustrant des sources de signal et une installation de caractérisation de ces sources selon l'invention ;
- la figure 2 est un organigramme du procédé de regroupement tel que mis en oeuvre dans l'invention ; et
- la figure 3 est une vue schématique illustrant la répartition d'éléments en plusieurs classes.

L'invention va être décrite dans le cadre de la localisation d'un ensemble d'émetteurs par goniométrie.

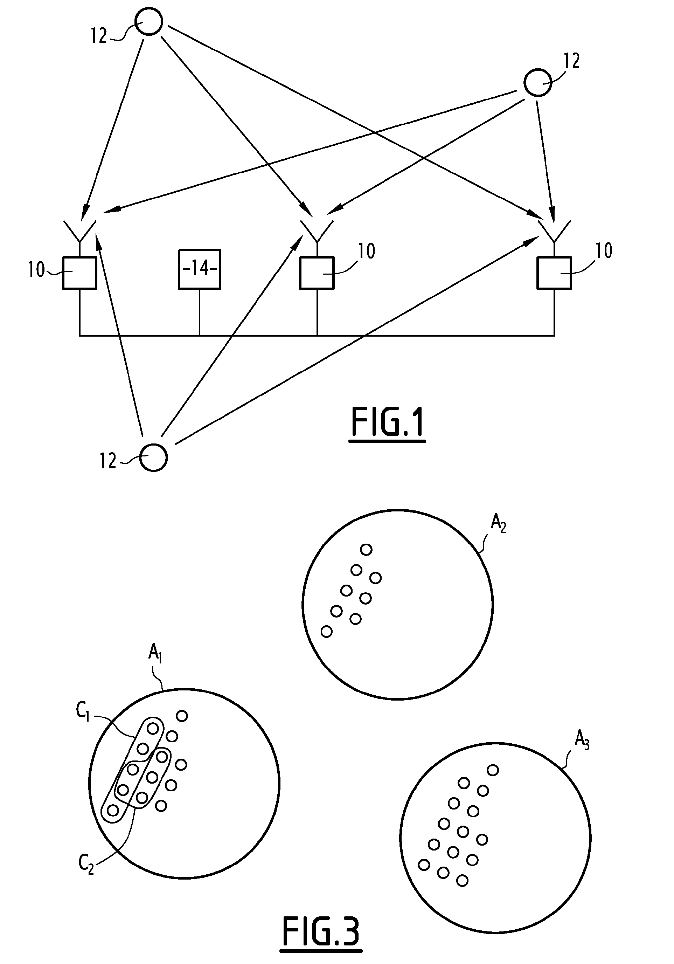

A cet effet, l'installation 8 illustrée sur la figure 1 comporte plusieurs récepteurs 10 munis chacun d'une antenne adaptée. Ces récepteurs 10 sont placés dans le champ d'émission de plusieurs émetteurs 12 dont les positions sont recherchées.

Chaque récepteur 10 est propre à déterminer, pour chaque signal reçu d'un émetteur, un azimut donnant la direction de l'émetteur d'où provient le signal intercepté et un écart-type estimé de cet azimut.

L'installation comporte en outre une unité centrale de traitement d'information 14 à laquelle sont reliés les récepteurs de communication par tout moyen adapté pour transmettre chaque azimut et l'écart-type correspondant.

Les azimuts mesurés et les écarts-types correspondants sont des mesures ou données gaussiennes. Elles sont mémorisées dans un ensemble $\Omega$ de données dans l'unité de traitement d'information 14.

L'unité centrale de traitement d'information 14 est propre, à partir de l'ensemble des données $\Omega$, à déterminer les positions les plus probables des émetteurs 10 à partir de calculs de corrélations faites sur ces données et de regroupement de ces données en classes sur la base de ces corrélations.

Chaque classe correspond à un émetteur et la position de l'émetteur est calculée par triangulation à partir des données de la classe.

Dans ce cadre, les données de l'ensemble $\Omega$ sont des mesures gaussiennes de relevé d'azimut. Elles sont définies par une position de mesure, un azimut donnant la direction de l'émetteur intercepté et un écart-type estimé de cet azimut.

La mesure de corrélation est définie pour tout sous-ensemble de données notées $i_1$ à $i_p$ de cardinalité $p \geq 3$ par la variance empirique suivante :

Si aucun des azimuts ne se recoupent, $c\{i_1,i_2,...,i_p\} = 0$

Sinon :

- On calcule une localisation $M\{i_1,i_2,...,i_p\}$ correspondant au p-uplet par un procédé de triangulation en supposant que toutes les mesures proviennent d'un seul émetteur. La localisation est obtenue par exemple en utilisant un procédé d'estimation reposant sur le principe du maximum de vraisemblance, dit algorithme de Torrieri, bien connu des gens du métier.

- On calcule la corrélation du p-uplet selon la formule de la variance empirique suivante :

$$c\{i_1, i_2, ..., i_p\} = 1 - \frac{1}{p.\pi^2} \sum_{j=1}^{p} \left| i_j - \hat{i}_j \right|^2$$

où $\hat{i}_j$ est l'azimut théorique de la j_éme mesure associé à une position $M\{i_1,i_2,...,i_p\}$ de l'émetteur.

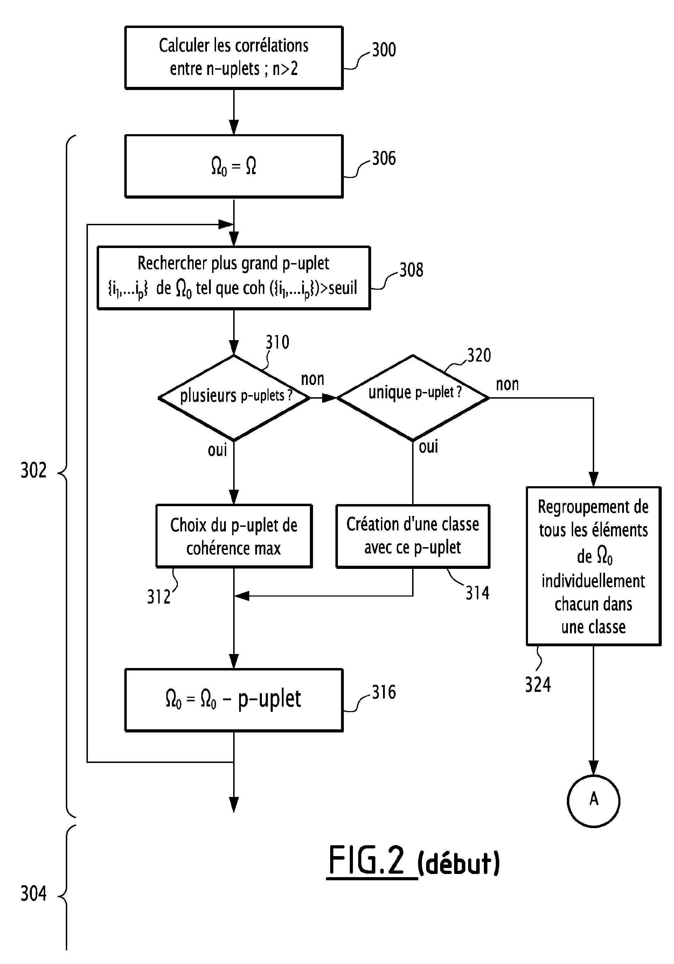

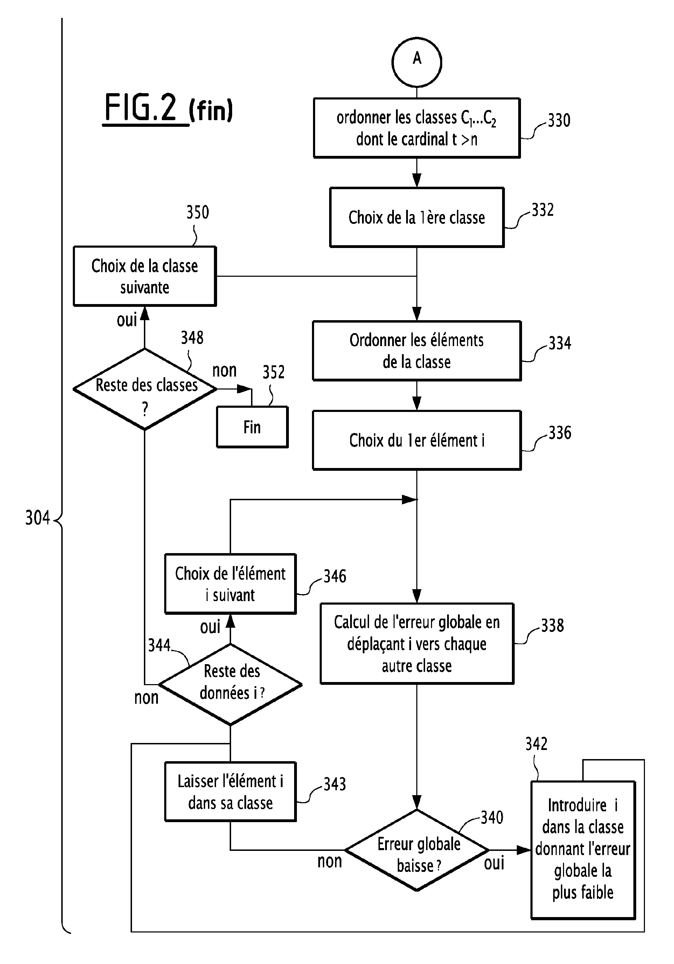

Pour la caractérisation des sources d'émission, et notamment ici la détermination de leur positon, le procédé illustré sur la figure 2 est mis en oeuvre par l'unité 14.

A l'étape initiale 300, les corrélations entre tous les n-uplets de l'ensemble d'éléments sont déterminées et sont mémorisées dans une base de données. La corrélation pour les éléments $\{i_1, i_2, ...i_n\}$ est notée $c_{i_1,i_2,...i_n}$.

Lors d'une phase initiale 302, l'ensemble des éléments est réparti dans des classes puis, les éléments sont redistribués dans une seconde phase 304 entre les classes pour optimiser le regroupement.

Sur la figure 3 sont illustrées trois classes notées A1, A2 et A3 comportant chacune des éléments techniques. Chaque élément d'une classe est formé d'une donnée.

On suppose dans cet exemple, connaitre la corrélation entre l'ensemble de ces éléments, pour ces éléments pris 5 par 5. Ainsi, une corrélation entre les éléments de chaque quintuplet ou cinquaine d'éléments, tel que les quintuplets C1 et C2 représentés sur la figure 1 est connue. La corrélation de chaque quintuplet est un nombre réel compris entre 0 et 1.

Initialement, à l'étape 306, un ensemble $\Omega_0$ des éléments restant à regrouper dans des classes est pris égal à l'ensemble $\Omega$ de tous les éléments.

A l'étape 308, on recherche le plus grand p-uplet $[i_1, ...i_p]$ dans $\Omega_0$ tel que :

$Coh(\{i_1...i_p\}) > seuil$ (condition 1). La valeur *seuil* est définie en fonction du problème et est suffisamment petite pour qu'il existe au moins deux p-uplets satisfaisant la condition 1.

La fonction cohérence notée Coh() d'une classe A est définie par :

➢ Si la fonction de corrélation c est strictement définie sur $\Omega^n$ avec $p > n$ :

$$Coh(A) = \frac{1}{C_{|A|}^n} \sum_{\{i_1,i_2,...i_n\} \subset A} c_{i_1,i_2...i_n} \quad i_1, i_2, ..., i_n \text{ distincts}$$

➢ Si la fonction de corrélation est définie sur $\Omega^p$ ou sur $\bigcup_{p \geq n} \Omega^n$ (c'est à dire pour un n-uplet de taille quelconque) :

la fonction de cohérence est donnée directement par application de la fonction de corrélation à l'ensemble des éléments de la classe : $Coh(A) = c\{i_1,i_2,...,i_{|A|}\}$ où $A = \{i_1,i_2,...,i_{|A|}\}$

avec $c_{i_1,i_2,...i_n}$ : la corrélation des éléments $\{i_1, i_2, ...i_n\}$

et $|A|$ désigne le cardinal de A

Ici, la mesure de cohérence $Coh(A) = c\{i_1,i_2,...,i_{|A|}\}$ d'un sous-ensemble A d'éléments $A = \{i_1,i_2,...,i_{|A|}\}$ de cardinalité $|A| = p \geq 3$ est directement définie par la mesure de corrélation $c\{i_1,i_2,...,i_p\}$ du p-uplet.

Si lors du test effectué à l'étape 310, plusieurs p-uplets de cardinalité maximale satisfont de la condition 1, le p-uplet conduisant à la cohérence maximale est choisi à l'étape 312.

A partir de ce p-uplet, une classe $C_i$ est créée. Elle contient initialement seulement les éléments de ce p-uplet.

A l'étape 316, l'ensemble $\Omega_0$ des éléments à regrouper est réduit des éléments du p-uplet affecté à la nouvelle classe créée. Les étapes 308 et suivantes sont à nouveau mises en oeuvre.

Si un unique p-uplet satisfait la condition 1 de l'étape 308 lors d'un test effectué à l'étape 320, alors ce p-uplet est utilisé pour créer une nouvelle classe $c_i$ à l'étape 314.

Si aucun p-uplet n'est trouvé comme satisfaisant la condition de l'étape 308 lors du test effectué à l'étape 320, l'ensemble des éléments restants sont placés à l'étape 324 individuellement chacun dans une nouvelle classe singleton.

La phase d'optimisation 304 est ensuite mise en oeuvre.

Initialement, les classes $C_i$ préalablement définies sont ordonnées par cardinalité croissante à l'étape 330 et une première classe de cardinalité minimale est choisie à l'étape 332. Les éléments contenus dans la classe sont également ordonnés à l'étape 334 de façon arbitraire et un premier élément est choisi à l'étape 336.

Une erreur globale Er(x) de la répartition entre les classes est d'abord calculée en l'état avant tout déplacement de l'élément i. Cette erreur globale d'un partitionnement X correspond à la somme des coûts de partitionnement sur tous les n-uplets d'éléments distincts et s'exprime sous la forme :

$$Er(X) = \sum_{i_1,i_2,...i_n \in \Omega^n} \left( c_{i_1,i_2,...i_n} \overline{x}_{i_1,i_2,...i_n} + \left( 1 - c_{i_1,i_2,...i_n} \right) x_{i_1,i_2,...i_n} \right)$$

où $x_{i1, i2, ...in}$ = 1 si $\forall_j$, $i_j \in$ même classe et 0 sinon (c'est à dire si au moins deux éléments $i_k$ et il n'appartiennent pas à la même classe)

Le coût de partitionnement pour un n-uplet est donné ici par :

❯ Si $i_1$, $i_2$, ...$i_n \in$ même classe $C_k$ : coût = 1 - $c(i_1, i_2, ...i_n)$
❯ Si $i_1$, $i_2$, ...$i_n \in$ classes différentes : coût = $c(i_1, i_2, ...i_n)$

où $c_{i_1,i_2,...i_n}$ est la corrélation entre les éléments $\{i_1, i_2, ...i_n\}$

Plus généralement, le coût de partitionnement est une fonction décroissante de la corrélation des n-uplets si tous les éléments du n-uplet sont dans une même classe et une fonction croissante si tous les éléments du n-uplet ne sont pas dans une même classe.

L'erreur globale Er(X) est ensuite calculée en déplaçant l'élément i choisi à l'étape 336 vers chacune des autres classes.

A l'étape 340, il est déterminé si l'erreur globale Er(X) baisse en déplaçant l'élément i. Si tel est le cas, l'élément i est introduit à l'étape 342 dans la classe permettant d'obtenir l'erreur globale Er(X) la plus faible.

Si l'erreur globale ne baisse pas, l'élément i est maintenu dans sa classe initiale à l'étape 343.

On détermine ensuite à l'étape 344 s'il reste des éléments i dans la classe considérée.

Si tel est le cas, l'élément suivant est choisi à l'étape 346 et les étapes 338 et suivantes sont à nouveau mises en oeuvre.

Si tel n'est pas le cas, on détermine à l'étape 348, s'il reste des classes non encore parcourues. Si tel est le cas, la classe suivante est choisie à l'étape 350 et les étapes 338 et suivantes sont à nouveau mise en oeuvre. Si toutes les classes ont été balayées, il est mis un terme à l'algorithme à l'étape 352.

L'application de l'algorithme permet alors de déterminer les classes d'azimuts présentant une bonne corrélation. Chacune de ces classes, est alors supposée correspondre à un seul émetteur, et une localisation par triangulation est alors mise en oeuvre pour chaque classe, par exemple avec un procédé du maximum de vraisemblance, dit algorithme de Torrieri.

Par application du procédé général, la liste des émetteurs à l'origine des mesures de goniométrie et leur localisation estimée sont obtenues.

On conçoit qu'avec un tel algorithme, les classes créées sont initialement relativement cohérentes et le déplacement des éléments éventuellement d'une classe à l'autre pour permettre une diminution de l'erreur globale de partitionnement permet d'améliorer encore la situation. Ainsi, on obtient facilement une répartition des éléments techniques en classes relativement similaires.

En variante, l'installation est propre à définir pour chaque source d'émission le mode d'émission. A cet effet, les données mesurées sont des informations temporelles caractéristiques du signal émis (fréquence, forme d'onde, etc.) depuis chaque récepteur.

Ces informations sont corrélées et regroupées suivant l'algorithme du mode de réalisation précédent.

Pour chaque classe de données ainsi obtenue, l'émetteur est caractérisé à partir des informations temporelles mesurées par toute méthode connue adaptée.

**Revendications**

1. Procédé de caractérisation d'au moins une source de signal (12) comportant les étapes consistant en :

   A/ mesure, depuis un ensemble de capteurs (10), d'un ensemble de données techniques propres aux signaux émis par la ou chaque source de signal (12) ;
   B/ regroupement (302, 304) des données techniques en un ensemble de classes en fonction des corrélations sur les données ; et
   C/ caractériser la ou chaque source de signal à partir des regroupements de données techniques effectuées ;

   **caractérisé en ce que** l'étape de regroupement comprend :

   a) calculer (300) des corrélations sur des n-uplets de données avec $n > 2$ ;
   b) calculer (338) une erreur globale de partitionnement $(Er(x))$ pour différentes répartitions des données dans des classes, l'erreur globale étant définie comme une somme, pour tous les n-uplets :

   - des coûts de partitionnement $(1 - c(i_1, ...ci_n))$ d'un n-uplet dans une même classe si toutes les données du n-uplet sont dans une même classe, le coût de partitionnement $(1 - c(i_1...i_n))$ dans une même classe étant une fonction décroissante de la corrélation du n-uplet ; et
   - des coûts de partitionnement $(c(i_1, ...i_n))$ d'un n-uplet dans des classes différentes lorsque toutes les données du n-uplet ne sont pas dans une même classe, le coût de partitionnement $(c(i_1...i_n))$ dans des classes différentes étant une fonction croissante de la corrélation du n-uplet ; et

   c) retenir (340) comme regroupement de données la répartition dans les classes minimisant l'erreur globale.

2. Procédé selon la revendication 1, **caractérisé en ce que** le coût de partitionnement dans une même classe est égale à 1 diminué de la corrélation du n-uplet $(1 - c(i_1, ...i_n))$ et le coût de partitionnement dans des classes différentes est égal à la corrélation du n-uplet $(c(i_1...1_n))$.

3. Procédé selon l'une quelconque des revendications précédentes, **caractérisé en ce que** le calcul d'une erreur globale de partitionnement pour différentes répartitions comporte :

   a1) une étape initiale de répartition des données dans M classes ;
   a2) une étape de déplacement des données entre les classes avec pour chaque déplacement le calcul d'une erreur globale de partionnement $(Er(x))$.

4. Procédé selon la revendication 3, **caractérisé en ce que** l'étape initiale de répartition comporte le calcul d'une fonction de cohérence $(Coh(A))$ entre les données d'une classe et le choix, pour créer une nouvelle classe, des données de l'ensemble (A) de cardinal maximal et dont la fonction de cohérence $(Coh(A))$ est supérieure à un seuil prédéterminé (seuil).

5. Procédé selon l'une quelconque des revendications précédentes, **caractérisé en ce que** les données techniques sont des directions d'émission de signaux interceptés depuis la ou chaque source de signal (14) et la caractérisation de la ou chaque source de signal (14) comporte une étape d'estimation de la position de la ou chaque source de signal par triangulation des données d'une même classe pour chaque source.

6. Procédé selon l'une quelconque des revendications 1 à 4, **caractérisé en ce que** les données techniques sont des informations temporelles caractéristiques des signaux interceptés depuis la ou chaque source de signal (14) et la caractérisation de la ou chaque source (14) comporte une étape d'estimation du mode d'émission de chaque source à partir des informations temporelles caractéristiques d'une même classe pour chaque source.

7. Installation de caractérisation d'au moins une source de signal (12) comportant :

   - des moyens de mesure, depuis un ensemble de capteurs (10), d'un ensemble de données techniques propres aux signaux émis par la ou chaque source de signal (12) ;
   - des moyens de regroupement des données techniques en un ensemble de classes en fonction des corrélations sur les données ; et
   - des moyens pour caractériser la ou chaque source de signal à partir des regroupements de données techniques effectuées ;

**caractérisé en ce que** les moyens de regroupement comprennent :

a) des moyens de calcul de corrélations sur des n-uplets de données avec n > 2 ;

b) des moyens de calculer (338) une erreur globale de partitionnement (Er(x)) pour différentes répartitions des données dans des classes, l'erreur globale étant définie comme une somme, pour tous les n-uplets :

- des coûts de partitionnement $(1 - c(i_1, ...ci_n))$ d'un n-uplet dans une même classe si toutes les données du n-uplet sont dans une même classe, le coût de partitionnement $(1 - c(i_{1...}i_n))$ dans une même classe étant une fonction décroissante de la corrélation du n-uplet ; et

- des coûts de partitionnement $(c(i_1, ...i_n))$ d'un n-uplet dans des classes différentes lorsque toutes les données du n-uplet ne sont pas dans une même classe, le coût de partitionnement $(c(i_1...i_n))$ dans des classes différentes étant une fonction croissante de la corrélation du n-uplet.

c) des moyens pour retenir (340) comme regroupement de données la répartition dans les classes minimisant l'erreur globale.

FIG.1

FIG.3

FIG.2 (début)

## FIG.2 (fin)

(A)

ordonner les classes $C_1...C_2$ dont le cardinal $t > n$ — 330

Choix de la 1ère classe — 332

350

Choix de la classe suivante

oui

348

Reste des classes ? — non — 352 — Fin

Ordonner les éléments de la classe — 334

Choix du 1er élément i — 336

304

Choix de l'élément i suivant — 346

oui

344 — Reste des données i ? — non

Calcul de l'erreur globale en déplaçant i vers chaque autre classe — 338

342

Laisser l'élément i dans sa classe — 343

Erreur globale baisse ? — 340

non

oui — Introduire i dans la classe donnant l'erreur globale la plus faible

Europäisches Patentamt
European Patent Office
Office européen des brevets

# RAPPORT DE RECHERCHE EUROPEENNE

Numéro de la demande

EP 14 18 4080

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | REED J D ET AL: "Multiple-source localization using line-of-bearing measurements: Approaches to the data association problem", MILITARY COMMUNICATIONS CONFERENCE, 2008. MILCOM 2008. IEEE, IEEE, PISCATAWAY, NJ, USA, 16 novembre 2008 (2008-11-16), pages 1-7, XP031408238, ISBN: 978-1-4244-2676-8 * page 2, "BRUTE-FORCE METHOD" * ----- | 1-7 | INV. G01S3/74 G01S3/46 |
| X | WO 2005/045467 A1 (THALES SA [FR]; FERREOL ANNE [FR]; HEURGUIER DOMINIQUE [FR]) 19 mai 2005 (2005-05-19) * pages 5-6 * ----- | 1 | |
| A | EP 2 605 420 A1 (THALES SA [FR]) 19 juin 2013 (2013-06-19) * La Figure 3, 0018 et 0026 * ----- | 1 | |
| A | US 8 175 851 B1 (FRANCIS JAMES COVOSSO [US] ET AL) 8 mai 2012 (2012-05-08) * abstract et les Figures 4-5 * ----- | 1 | DOMAINES TECHNIQUES RECHERCHES (IPC)<br><br>G06K<br>G01S |
| A | YONG UP LEE ET AL: "Angle-of-Arrival Estimation for UWB Signals Clustered in Angle", 2006 1ST INTERNATIONAL SYMPOSIUM ON WIRELESS PERVASIVE COMPUTING, 1 janvier 2006 (2006-01-01), pages 1-4, XP055126849, DOI: 10.1109/ISWPC.2006.1613581 * Figure 1, III * ----- | 1 | |
| A | US 2010/283666 A1 (LEE DONG-WEON [KR] ET AL) 11 novembre 2010 (2010-11-11) ----- | 1 | |

-/--

Le présent rapport a été établi pour toutes les revendications

| Lieu de la recherche | Date d'achèvement de la recherche | Examinateur |
|---|---|---|
| La Haye | 29 septembre 2014 | Versluis, Anton |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P04C02)

Europäisches
Patentamt

European
Patent Office

Office européen
des brevets

# RAPPORT DE RECHERCHE EUROPEENNE

Numéro de la demande

EP 14 18 4080

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | US 8 144 057 B1 (MINKOFF JOHN [US]) 27 mars 2012 (2012-03-27) ----- | 1 | |
| A,P | BECKER HANNA ET AL: "High resolution direction finding from rectangular higher order cumulant matrices: The rectangular 2Q-music algorithms", 2014 IEEE INTERNATIONAL CONFERENCE ON ACOUSTICS, SPEECH AND SIGNAL PROCESSING (ICASSP), IEEE, 4 mai 2014 (2014-05-04), pages 2242-2246, XP032617326, DOI: 10.1109/ICASSP.2014.6853998 [extrait le 2014-07-11] * l'abstrait, 2.1 * ----- | 1 | |

DOMAINES TECHNIQUES RECHERCHES (IPC)

Le présent rapport a été établi pour toutes les revendications

| Lieu de la recherche | Date d'achèvement de la recherche | Examinateur |
|---|---|---|
| La Haye | 29 septembre 2014 | Versluis, Anton |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 14 18 4080

La présente annexe indique les membres de la famille de brevets relatifs aux documents brevets cités dans le rapport de
recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

29-09-2014

| Document brevet cité<br>au rapport de recherche | Date de<br>publication | Membre(s) de la<br>famille de brevet(s) | Date de<br>publication |
|---|---|---|---|
| WO 2005045467 A1 | 19-05-2005 | EP 1682923 A1<br>ES 2400352 T3<br>FR 2865281 A1<br>US 2007069949 A1<br>WO 2005045467 A1 | 26-07-2006<br>09-04-2013<br>22-07-2005<br>29-03-2007<br>19-05-2005 |
| EP 2605420 A1 | 19-06-2013 | EP 2605420 A1<br>FR 2984492 A1 | 19-06-2013<br>21-06-2013 |
| US 8175851 B1 | 08-05-2012 | AUCUN | |
| US 2010283666 A1 | 11-11-2010 | KR 20100121108 A<br>US 2010283666 A1 | 17-11-2010<br>11-11-2010 |
| US 8144057 B1 | 27-03-2012 | AUCUN | |

EPO FORM P0460

Pour tout renseignement concernant cette annexe : voir Journal Officiel de l'Office européen des brevets, No.12/82